# EUROPEAN PATENT SPECIFICATION

(11) **EP 1 647 190 B1**
(45) Date of publication and mention of the grant of the patent: **09.09.2009**
(21) Application number: 04425782.2
(22) Date of filing: 18.10.2004
(51) Int. Cl.: A21C 15/02, A21C 9/06

(54) **Method for welding wafer sheets and product so obtained**
Verfahren zum Verschweissen von Waffelblättern und das so erhaltene Produkt
Procédé de soudage de feuilles de gaufre et produit ainsi obtenu

(43) Date of publication of application: 19.04.2006
(73) Proprietor: SOREMARTEC S.A., 6700 Arlon (BE); Ferrero S.p.A., 12051 Alba (Cuneo) (IT); FERRERO OFFENE HANDELSGESELLSCHAFT m.b.H., 35260 Stadtallendorf (DE)
(72) Inventor: Mansuino, Sergio, 12084 Mondovi' (CN) (IT)
(74) Representative: Rambelli, Paolo

(56) References cited:
- EP-A- 0 054 229
- US-A- 2 134 026
- US-A- 3 532 510
- US-A- 3 685 744
- US-A- 3 867 559
- US-A- 4 759 706
- US-A- 4 913 043
- US-A- 5 063 068
- US-A- 5 296 247
- US-A- 5 328 509
- US-B1- 6 444 245

## Description

The invention has been developed with reference to processes of manufacturing confectionery products comprising two half-shells or valves of wafer sheet connected to each other at the rim portions which face each other, so as to form a wafer shell, including a filler product inside it.

For a general description of products of this type, reference may be made to European patents EP-B-0 083 324, EP-B-0 086 319 and EP-B-0 614 614, for example.

To connect the valves or half-shells to each other, EP-B-0 086 319 makes use of an additional material, consisting in the case in point of melted chocolate, deposited in a continuous line or in drops spaced apart from each other on the annular rim surfaces of the two half-shells.

EP-B-0 614 614 describes a method and a device for forming lines of welding between wafer sheets by using an alimentary adhesive material, consisting in the case in point of melted chocolate.

In view of the use of melted chocolate as an adhesive material, the methods described in the patents cited above do not provide adhesion between the wafer half-shells which is strong at a temperature higher than the melting temperature of the chocolate.

US-A-5 063 068 describes laminated bread wafers produced by moistening the outer crusts of two bread sheets and fusing together the fusable and moistened crusts with application of pressure.

US-A-1 382 601 and US-A-1 383 290 describe a product comprising two semi-spherical sections which may be made of dough and baked crisp, which are fastened together by a sealing material or cement which may be composed of flour, gelatine and water or dough mixed with gelatine.

The primary purpose of the present invention is to provide a method of producing a confectionery product comprising two wafer half shells, bonded together along their annular rim mating surfaces, achieving a bond which is strong even at temperatures higher than 33°C.

Another purpose of the present invention is to provide a method capable of being applied industrially, particularly on a continuous production line, without the need to employ relatively complex machines for depositing adhesive material, such as those described in EP-B-0 614 614.

According to the invention, these purposes are achieved by means of a method according to claim 1.

Further characteristics of the method of the invention are cited in the appended claims.

The principle on which the invention is based consists essentially in the fact that moistening or wetting the wafer surfaces to be joined gives said surfaces properties of adhesion by reciprocal contact. The weld is therefore characterised by the substantial absence of cementing or adhesive materials between the parts welded. Consequently, the use of cementing or adhesive materials is not included in the invention.

The moistening agent used is water in the liquid state, not containing any cementing or adhesive materials.

The moistening agent is preferably applied to the surfaces to be joined by spraying, particularly by means of spraying by nebulising or atomising. The moistening may involve a thin surface layer of the parts to be joined. Adhesion occurs following contact between the moistened parts, followed by drying with evaporation of the moistening agent, optionally assisted by heating.

A particularly surprising fact is that with the use of water alone, not containing any cementing or adhesive materials, it is possible to achieve strong adhesion by contact which gives the product resulting from the welding of wafer sheets adequate structural strength allowing it to be handled in the subsequent steps of industrial production where there are temperatures above 33°C.

It is probable that the adhesion by contact is the result of a dissolving action of the moistening agent with respect to the components of the wafer sheet material, though this explanation is not to be taken as binding in relation to the invention.

As far as the wafer sheet material is concerned, the solution according to the invention provides for the production of wafer according to the current process, using conventional batter formulations comprising a mixture of flour or flours in water, usually with the addition of ingredients such as milk, emulsifiers such as lecithin, raising agents etc..

As an example, a batter formulation may comprise the following ingredients:
- Water 40-60% by weight
- Flour 30-45% by weight
- Sugars 0.5-2% by weight
- Cocoa cake 1-2% by weight
- Alimentary fats 1.5-2.5% by weight
- Skimmed milk 0.5-1.5% by weight
and further ingredients chosen from among sodium bicarbonate, salt, ammonium carbonate, soya lecithin, each of these, where present, being used in concentrations of not more than 0.5% by weight.

The batter is cooked in heated moulds to obtain wafers shaped in the form of half-shells.

Industrial methods for the preparation of the half-shells of wafer sheet to which the invention relates and structural morphological characteristics of these half-shells are described for example in EP-A-0 054 229, EP-A-0 221 033, WO97/48282 and US 2004/137123 on behalf of the applicant, and reference may be made to these.

The morphological characteristics of the surfaces of the wafer half-shells to be joined depend on the production process by which the individual half-shells are obtained.

According to the method described in EP-A-0 054 229 and EP-A-0 221 033, individual half-shells are obtained from a wafer sheet which has a plurality of half-shells connected by an interconnecting wall, by means of a cutting operation carried out parallel to the plane of the interconnecting wall. In this case, the annular rim surfaces of the half-shells have a crumbly and porous surface resulting from the cutting operation, in which the porous internal structure of the wafer is exposed to the outside.

Alternatively, the annular rim surfaces may have a high degree of surface finish free from macropores, when the half-shells are obtained using the technologies described in US 2004/137123.

In any case, the adhesion characteristics of the two half-shells, in the method according to the invention, are not substantially affected by the morphological characteristics of the surfaces to be welded, and these may therefore have a highly porous and/or crumbly structure or a high degree of surface finish, that is a smooth surface substantially free from macropores, or may also have a kind of surface skin.

In general, the wafer sheet, at least inside, has a porous cellular structure. The wetting of at least a thin surface layer of the parts to be welded and the subsequent welding by contact, with a slight pressure applied, may involve the collapse of the cells of the porous structure, so that in general the product of welding has a non-porous weld area formed by a thin layer with collapsed cells, the material composition of which is substantially identical to the composition of the wafer material constituting the parts welded.

The method according to the invention is suitable for application in a normal continuously operating cycle producing wafer shells, for example for the production of praline encased in wafer.

In this production process, typically rows of half-shells are arranged in corresponding cavities in a mould in the form of a plate, and rows of half-shells complementary to the first are arranged in another mould plate.

At this point, a metered amount of filler product of conventional type may be placed inside the individual half-shells; it should however be understood that the welding method disclosed by the invention is completely independent of whether or not there is a filler product inside the half-shells, since the welding method disclosed by the invention in no way relies on any cementing characteristics of the filler product.

In the method of production indicated above, at this point the method according to the invention makes provision, for example, for spraying the nebulised moistening agents onto the moulds, which where applicable are in forward motion.

According to a preferred form of embodiment, before the moistening agent (nebulised water) is sprayed, a mask may be fitted onto the moulds, having a plurality of apertures corresponding in shape to the annular rim surfaces of the half-shells, and therefore capable of covering the cavities of each mould containing the half-shells, leaving uncovered only the above-mentioned annular rim surfaces to be mated together.

This measure is preferable in order to avoid wetting the inside containing wall of the half-shells and/or wetting the filler product or filling.

After the protective mask has been fitted, the nebulised water is sprayed onto the moulds, and because of the protective action of the mask is deposited only on the uncovered rim surfaces to be mated together.

The quantity of water or moistening agent applied is minimal relative to the weight of the wafer half-shell and preferably such that only a thin surface layer of the mating surfaces is wetted.

Next, after the protective mask is removed, the moulds are mated together by turning one mould over onto the other, so as to obtain adhesion of the rim surfaces of the complementary half-shells.

Finally, the mated moulds may be transferred to an evaporation station, to remove the moisture added when the nebulised water was applied. This last step of evaporation is to be understood as optional, though preferred in an industrial process. Said step of evaporation may be performed in various ways, such as for example exposing the shells to a flow of air (hot or cold) or treatment with microwaves or infrared rays.

The method according to the invention is preferably applied to the preparation of products formed by mating together half-shells of wafer which are small in size, for example of the order of 2.5-3 cm, so that they can be consumed in one mouthful; however, the method is equally applicable to larger-sized products, such as for example snack bars comprising an internal wafer shell structure.

Similarly, it should be understood that the shape of the half-shells may vary widely and includes not only substantially spherical shapes but also elongated shapes and shapes with rims (that is mating surfaces) having different outlines, including circular, ovoid, polygonal or mixtilinear shapes.

The shell obtained by welding the half-shells includes a filling or a filler product, introduced into the half-shells before welding.

A liquid or semi-liquid filler may also be introduced into the welded shell by means of an aperture in one of the half-shells, produced when the half-shell is shaped in the mould, or made by means of a metering syringe or similar device. The structural strength of the welded shell is such as to permit the above-mentioned operation of syringe injection through the wall of the shell.

## Claims

1. A method for producing a product comprising a wafer shell formed by two concave half-shells of baked wafer batter including a filling wherein said half shells have reciprocal annular mating rim surfaces and are welded together along said rim surfaces, **characterised in that** said baked half-shells are welded to each other by the moistening of at least one of said mating rim surfaces by application of a moistening agent consisting of water in the liquid state, not containing any cementing or adhesive material, followed by adhesion by reciprocal contact of said surfaces.

2. A method according to claim 1, **characterised in that** the moistening agent is applied to at least one of said mating surfaces by means of a distribution system, preferably by means of spraying by nebulising or atomising.

3. A method according to any one of the preceding claims, **characterised in that** moistening is carried out so as to wet at least a thin surface layer in the mating surfaces.

4. A method according to any one of the preceding claims, comprising the steps of:
- supporting the half-shells to be welded to each other in respective support plates provided with cavities substantially complementary in shape to the walls of the half-shells;
- applying to said support plates a mask provided with apertures corresponding in shape to the rim surfaces of the half-shells, so as to leave uncovered only said rim surfaces;
- nebulising the moistening agent so as to cause moistening of at least a thin layer of the rim surface of said half-shells;
- removing said mask and causing adhesion by contact of the complementary rim surfaces of the half-shells by turning one of said support plates over onto the other.

5. A method according to any one of the preceding claims, **characterised in that**, following adhesion by contact, provision is made for drying out the parts of the welded half-shells, to cause evaporation of the moistening agent.

6. A method according to claim 5, in which the drying operation is carried out by means of treatment with microwaves, infrared rays, cold air or hot air.

7. A product as obtainable by the method of any of claims 1 to 6.

## Patentansprüche

1. Verfahren zur Erzeugung eines Produktes, umfassend ein Waffelblatt, gebildet durch zwei konkave Halbseiten von gebackenen Waffeln aus Backteig, umfassend eine Füllung, worin die Halbseiten reziproke, ringförmige Anschlussringoberflächen aufweisen und entlang den Anschlussoberflächen verbunden sind, **dadurch gekennzeichnet, dass** die gebackenen Halbseiten mit einander verschweißt sind, indem zumindest eine der Anschlussringoberflächen angefeuchtet wird durch Auftragung eines Befeuchtungsmittels bestehend aus Wasser im flüssigen Zustand, das nicht irgendein Zementier- oder Adhäsivmaterial umfasst, mit anschließender Adhäsion durch reziproken Kontakt der Oberflächen.

2. Verfahren nach Anspruch 1, **dadurch gekennzeichnet, dass** das Befeuchtungsmittel auf zumindest eine der Anschlussoberflächen mit Hilfe eines Verteilungssystems, bevorzugt mit Hilfe des Sprühens durch Nebelbildung oder Atomisierung aufgetragen wird.

3. Verfahren nach einem der vorhergehenden Ansprüche, **dadurch gekennzeichnet, dass** das Befeuchten so durchgeführt wird, dass zumindest eine dünne Oberflächenschicht in den Anschlussoberflächen benetzt wird.

4. Verfahren nach einem der vorhergehenden Ansprüche, umfassend folgende Schritte:
- Abstützen der Halbseiten, die miteinander verschweißt werden sollen, in jeweiligen Trägerplatten, die mit Hohlräumen versehen sind, die im Wesentlichen komplementär bezüglich der Form zu den Wänden der Halbseiten sind;
- Auftragen einer Maske auf die Trägerplatten, die mit Öffnungen versehen ist, die bezüglich der Form den Anschlussoberflächen der Halbseiten entsprechen, um so nur diese Anschlussoberflächen unbedeckt zu lassen;
- Nebelbildung des Befeuchtungsmittels, um so eine Befeuchtung von zumindest einer dünnen Schicht aus der Anschlussoberfläche der Halbseiten zu bilden;
- Entfernen der Maske und Verursachen der Adhäsion durch Kontakt der komplementären Anschlussoberflächen der Halbseiten durch Übereinanderlagern der Trägerplatten.

5. Verfahren nach einem der vorhergehenden Ansprüche, **dadurch gekennzeichnet, dass** nach der Adhäsion durch Kontakt die Teile der verschweißten Halbseiten zum Trocknen gebracht werden, zur Verursachung einer Verdampfung des Befeuchtungsmittels.

6. Verfahren nach Anspruch 5, worin der Trocknungsvorgang mit Hilfe einer Behandlung mit Mikrowellen, Infrarotstrahlen, kalter Luft oder heißer Luft durchgeführt wird.

7. Produkt, erhältlich durch das Verfahren nach einem der Ansprüche 1 bis 6.

## Revendications

1. Procédé de fabrication d'un produit comportant une coque de gaufrette formée par deux moitiés de coque concaves de pâte à gaufrette cuite au four comprenant un fourrage, dans lequel lesdites moitiés de coque ont des surfaces de bord appariées, annulaires, réciproques, et sont soudées l'une à l'autre le long desdites surfaces de bord, **caractérisé en ce que** lesdites moitiés de coque cuites au four sont soudées l'une à l'autre par l'humidification d'au moins l'une desdites surfaces de bord appariées par application d'un agent d'humidification consistant en de l'eau à l'état liquide, ne contenant pas de matière adhésive ou de soudage, suivie par adhérence, par contact mutuel, desdites surfaces.

2. Procédé selon la revendication 1, **caractérisé en ce que** l'agent d'humidification est appliqué sur au moins l'une desdites surfaces appariées au moyen d'un système de distribution, de préférence au moyen d'une pulvérisation par nébulisation ou atomisation.

3. Procédé selon l'une quelconque des revendications précédentes, **caractérisé en ce que** l'humidification est mise en oeuvre afin de mouiller au moins une mince couche de surface dans les surfaces appariées.

4. Procédé selon l'une quelconque des revendications précédentes, comprenant les étapes consistant à :
- supporter les moitiés de coque devant être soudées l'une à l'autre dans des plaques de support respectives pourvues de cavités d'une forme sensiblement complémentaire à celle des parois des moitiés de coque ;
- appliquer sur lesdites plaques de support un masque pourvu d'ouvertures ayant une forme correspondant à celle des surfaces de bord des moitiés de coque, afin de laisser uniquement lesdites surfaces de bord découvertes ;
- nébuliser l'agent d'humidification afin de provoquer l'humidification d'au moins une mince couche de la surface de bord desdites moitiés de coque ;
- ôter ledit masque et provoquer l'adhérence par contact des surfaces de bord complémentaires des moitiés de coque en retournant l'une desdites plaques de support sur l'autre plaque.

5. Procédé selon l'une quelconque des revendications précédentes, **caractérisé en ce que**, après l'adhérence par contact, il est prévu de faire sécher les parties des moitiés de coque soudées, pour provoquer l'évaporation de l'agent d'humidification.

6. Procédé selon la revendication 5, dans lequel l'opération de séchage est mise en oeuvre au moyen d'un traitement aux micro-ondes, par rayons infrarouges, air froid ou air chaud.

7. Produit pouvant être obtenu par le procédé selon l'une quelconque des revendications 1 à 6.
